# EUROPEAN PATENT APPLICATION

(11) **EP 2 107 843 A1**
(43) Date of publication of application: **07.10.2009**
(21) Application number: 08167656.1
(22) Date of filing: 27.10.2008
(51) Int. Cl.: H04W 36/32

(54) **Communication controlling apparatus and communication controlling method**

(30) Priority: 31.03.2008 JP 2008092971
(71) Applicant: Fujitsu Limited, Kawasaki-shi, Kanagawa 211-8588 (JP)
(72) Inventor: Yasuoka, Hirotomo c/o FUJITSU LIMITED, Kawasaki-shi, Kanagawa 211-8588 (JP); Tomita, Tetsuo c/o FUJITSU LIMITED, Kawasaki-shi, Kanagawa 211-8588 (JP)
(74) Representative: Stebbing, Timothy Charles

(57) **Abstract**

A technique for limiting handovers of a fast-moving mobile device in a cellular wireless communication system, based on setting the pattern ("shift pattern") in which handovers should be made along the route, based on predetermined "tracks". A communication controlling apparatus 200 includes a track information storage unit 210c that has stored therein track information including tracks passing through a management area of the communication controlling apparatus, and shift patterns indicative of which cell and in what order the handover is preferably executed for when a mobile device moves on the tracks defined in a correlated manner; and a movement speed determining unit 230 that determines whether a movement speed of the mobile device is equal to a predetermined speed or more. The apparatus also includes a track determining unit 240 that determines a track including the mobile device in motion by extracting from the track information 210c a track including a cell the mobile device belongs to in the shift pattern if the movement speed determining unit determines that a movement speed of the mobile device is equal to a predetermined speed or more.

## Description

The present invention relates to a communication controlling apparatus and a communication controlling method controlling handover of a mobile device in a radio communication network, and more particularly, to a communication controlling apparatus and a communication controlling method capable of making more reliable the execution of handover at the time of high-speed movement of the mobile device.

Generally, a plurality of radio communication areas called cells is formed in a radio network system. Base station apparatuses defining the respective cells are arranged such that no gap is left between the cells, and the base stations are connected through wires to each other via a large-capacity network called the core network.

A mobile device for radio communication in such a radio network system is controlled to communicate with another mobile device through a base station apparatus currently providing the best radio-wave reception status. For example, if a mobile device in communication moves from an area of cell A to an area of cell B, the mobile device is controlled such that the communication is performed using a radio link with a base station apparatus serving the cell B instead of a base station apparatus of the cell A when a radio-wave reception status of the cell B satisfies a predetermined condition.

A process of switching radio links between a mobile device and base station apparatuses in accordance with movement of the mobile device in this way is referred to as handover. Although the handover is performed in accordance with a procedure aimed at preventing temporary discontinuity, communication tends to become unstable at the time of execution of handover. Especially, in the case of mobile devices moving at high speed such as mobile devices communicating in moving trains or in automobiles moving on expressways, communication is likely to become unstable since the handover is more frequently executed.

To solve this problem, a technology has been proposed to identify points of generation of handover with a car navigation apparatus and comprehend positions of cell boundaries to constrain occurrence of unnecessary handover. A technology has also been proposed to preliminarily define movement patterns such as movement patterns during travel on expressways and to perform control such that handover is executed for a mobile device moving in the same pattern as one of the movement patterns in accordance with the corresponding movement pattern (see, e.g., Japanese Patent Application Laid-open No. 2003-009207 and Japanese Patent Application Laid-open No. 10-290475).

However, the technology of identifying points of generation of handover with a car navigation apparatus cannot solve the problem of handover in a mobile device moving with a transporting unit without a car navigation apparatus such as a mobile device communicating in a moving train. Since a process of a certain cell is preferentially executed so as to perform handover in accordance with a corresponding movement pattern in the technology of preliminarily defining movement patterns, handover is not necessarily executed in accordance with the movement pattern.

It is therefore desirable to at least partially solve the problems in the conventional technology.

According to an aspect of the present invention, a communication controlling apparatus is for controlling handover of a mobile device in a radio communication network. The communication controlling apparatus includes a track information storage unit that has stored therein track information including tracks passing through a management area of the communication controlling apparatus and shift patterns indicative of which cell and in what order the handover is preferably executed for when the mobile device moves on the tracks defined in a correlated manner; a movement speed determining unit that determines whether a movement speed of the mobile device is equal to a predetermined speed or more; a track determining unit that determines a track including the mobile device in motion by extracting from the track information a track including a cell the mobile device belongs to in the shift pattern if the movement speed determining unit determines that a movement speed of the mobile device is equal to a predetermined speed or more; and a handover controlling unit that performs control such that the mobile device notifies of a radio wave condition only for a destination cell that is the next handover target cell in the shift pattern corresponding to the track determined by the track determining unit.

According to another aspect of the present invention, a communication controlling method is of controlling handover of a mobile device in a radio communication network. The communication controlling method includes storing track information including tracks passing through a management area of a communication controlling apparatus and shift patterns indicative of which cell and in what order the handover is preferably executed for when the mobile device moves on the tracks defined in a correlated manner; determining whether a movement speed of the mobile device is equal to a predetermined speed or more; determining a track including the mobile device in motion by extracting a track including a cell the mobile device belongs to in the shift pattern from a track information storage unit having stored therein the tracks passing through a management area of the communication controlling apparatus and the shift patterns indicative of which cell and in what order the handover is preferably executed for when the mobile device moves on the tracks in a correlated manner if it is determined that a movement speed of the mobile device is equal to a predetermined speed or more; and performing control such that the mobile device notifies of a radio wave condition only for a destination cell that is the next handover target cell in the shift pattern corresponding to the track determined.

Note that in the above, the term "track" refers to any kind of route or movement pattern through space which it is possible to predict may be taken by a mobile device as it moves, such as traffic paths including expressways and railroads. Therefore, the term does not imply a physically-identifiable "track", though in the case of a mobile device on a train, it may correspond to a railroad track. Depending on the situation of the mobile device, a number of possible predetermined paths may exist each of which may be set as "track information".

The features, advantages and technical and industrial significance of this invention will be better understood by reading the following detailed description of presently preferred embodiments of the invention, when considered in connection with the accompanying drawings, in which:
Fig. 1 is a view of an example of a radio network system according to a first embodiment;
Fig. 2 is a view of an execution procedure of the handover;
Fig. 3 is a view of an example of a case in which handover frequently occurs;
Fig. 4 is a functional block diagram of a configuration of an RNC according to the first embodiment;
Fig. 5 is a view of an example of mobile device information;
Fig. 6 is a view of an example of surrounding cell information;
Fig. 7 is a view of an example of track information;
Fig. 8 is an explanatory view of estimation of movement speed from the number of times of handover;
Fig. 9 is a view of a message format of a radio link setting request;
Fig. 10 is a flowchart of a process procedure of a movement speed determining process;
Fig. 11 is a flowchart of a process procedure of a measurement report response receiving process;
Fig. 12 is a flowchart of a process procedure of a radio link setting request receiving process;
Fig. 13 is a flowchart of a process procedure of a radio link setting response receiving process;
Fig. 14 is a functional block diagram of a configuration of a mobile device according to the second embodiment;
Fig. 15 is an explanatory view of estimation of movement speed in the mobile device;
Fig. 16 is a view of a message format of a measurement report response;
Fig. 17 is a functional block diagram of a configuration of an RNC according to the second embodiment;
Fig. 18 is a view of an example of mobile device information;
Fig. 19 is a flowchart of a process procedure of a measurement report request transmitting process;
Fig. 20 is a flowchart of a process procedure of a measurement report response receiving process;
Fig. 21 is a flowchart of a process procedure of the radio link setting request receiving process;
Fig. 22 is a flowchart of a process procedure of the radio link setting response receiving process; and
Fig. 23 is a view of an example of cells and tracks.

Exemplary embodiments of the communication controlling apparatus and the communication controlling method disclosed in this application will be explained in detail with reference to the accompanying drawings. Although the case of applying the technology disclosed in this application to the third generation mobile communication network will be explained by way of example in the following embodiments, this is not a limitation of an applicable range of the technology disclosed in this application.

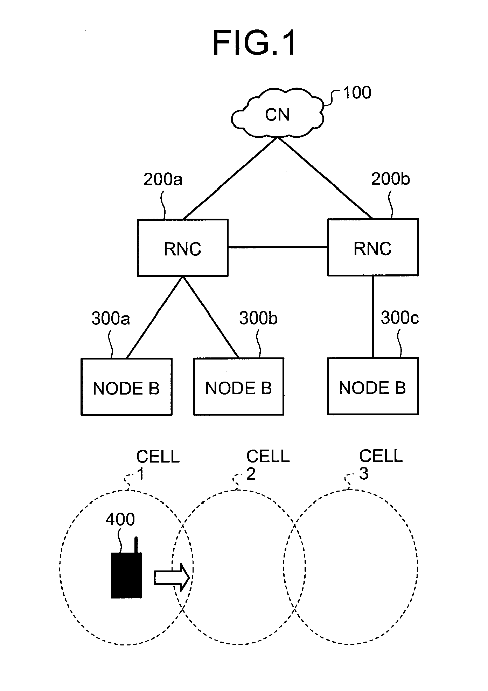

A schematic of a handover controlling method according to a first embodiment will first be explained. Fig. 1 is a view of an example of a radio network system according to the first embodiment. The radio network system of Fig. 1 includes a CN (core network) 100, RNCs (radio network controllers) 200a and 200b, NodeBs (base station apparatuses) 300a to 300c, and a mobile device 400.

When a specific one of the RNCs 200a and 200b need not be identified in the following description, the RNCs 200a and 200b are collectively referred to as RNC 200. Similarly, when one of the NodeBs 300a to 300c need not be identified, the NodeBs 300a to 300c are collectively referred to as NodeB 300.

The CN 100 is a large-capacity wide area network. The RNC 200 is a communication controlling apparatus that manages a plurality of NodeBs 300 to execute various types of control necessary for implementing radio communication. The NodeB 300 is a communicating apparatus that serves a cell, i.e., a radio communication area having a predetermined extent to provide a radio link for a mobile device such as the mobile device 400 located within a cell around this station. The mobile device 400 is a mobile radio communicating apparatus, e.g., a portable telephone terminal.

The mobile device 400 communicates with another mobile device, etc., through the NodeB 300 serving a cell where the mobile device 400 is located. For example, if the mobile device 400 is located within an area of a cell 1 served by the NodeB 300a, a radio link is established between the mobile device 400 and the NodeB 300a, and the mobile device 400 communicates with another mobile device, etc., through this radio link.

If the mobile device 400 moves into an area of a cell 2 served by the NodeB 300b, a new radio link is established between the mobile device 400 and the NodeB 300b, and the mobile device 400 communicates with another mobile device, etc., through this radio link. This process of changing radio links used by the mobile device 400 for communication in accordance with movement between cells is referred to as handover.

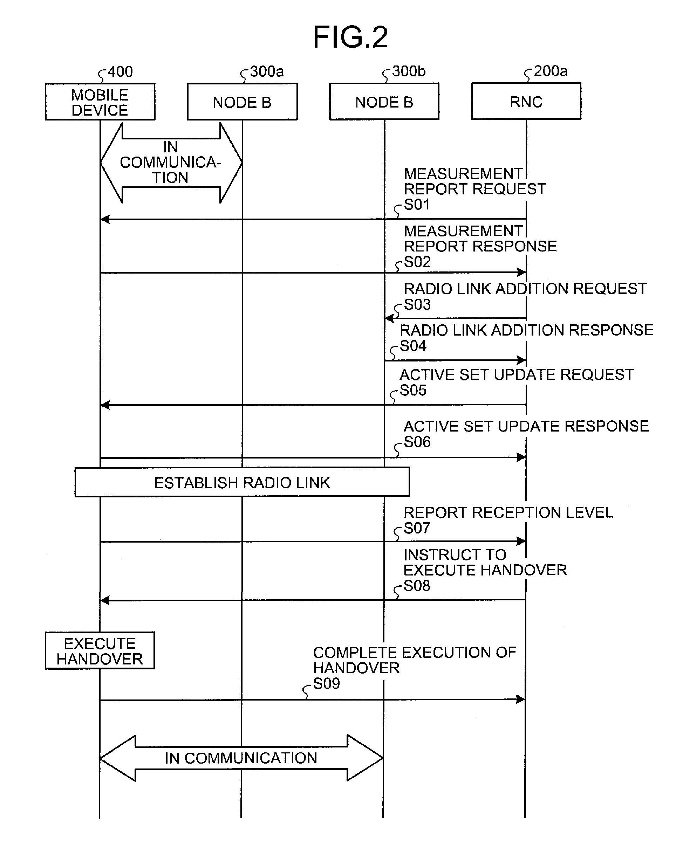

Fig. 2 is a view of an execution procedure of the handover. Fig. 2 shows a procedure when the mobile device 400 moves from a cell served by the NodeB 300a to a cell served by the NodeB 300b. It is assumed that the NodeB 300a and the NodeB 300b are subject to the RNC 200a.

As shown in Fig. 2, the RNC 200a transmits a measurement report request to the mobile device 400 through the NodeB 300a to request measurement and report of a radio status while the mobile device 400 communicates through the NodeB 300a (Step S01). This measurement report request includes information of surrounding cells of the cell where the mobile device 400 is located. When receiving the measurement report request, the mobile device 400 measures and reports reception levels of signals transmitted by base stations in the surrounding cells as a measurement report response to the RNC 200a through the NodeB 300a (Step S02).

The RNC 200a determines based on the measurement report response whether the handover must be executed. If the received electric field intensity becomes equal to a predetermined value or more in (from) the cell of the adjacent base station, i.e., the NodeB 300b, it is determined that handover is necessary, and a radio link addition request is transmitted to the NodeB 300b (Step S03). The NodeB 300b executes a necessary process for the radio link addition request and then returns a radio link addition response to the RNC 200a (Step S04).

The RNC 200a then transmits an active set update request to the mobile device 400 through the NodeB 300a to cause the mobile device 400 to be prepared for the handover (Step S05). When receiving the active set update request, the mobile device 400 executes a necessary process and returns an active set update response to the RNC 200a (Step S06). A radio link is newly established between the mobile device 400 and the NodeB 300b with the above procedure.

If the received electric field intensity from the NodeB 300b becomes equal to a predetermined value or less continuously for a set time period in this state, the mobile device 400 notifies the RNC 200a of the reception level (Step S07). This notification causes the RNC 200a to determine termination of the communication between the mobile device 400 and the NodeB 300a and to instruct the mobile device 400 to execute the handover (Step S08). The mobile device 400 executes the handover in accordance with the instruction and notifies the RNC 200a of the completion of execution of the handover (Step S09). The mobile device 400 hereinafter continues communication through the NodeB 300b.

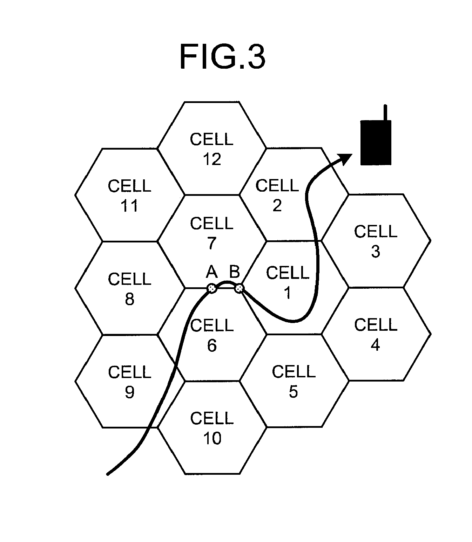

The base station apparatus relaying the communication of the mobile device 400 may perform switchover from the NodeB 300a to the NodeB 300b without any break in reception by the mobile device, with the above procedure. However, since communication tends to become unstable at the time of execution of the handover, it is preferable to avoid occurrence of unnecessary handover. Fig. 3 is a view of an example of a case in which communication tends to become unstable due to handover.

Fig. 3 is a view of an example of a case where handover frequently occurs. Fig. 3 shows that an expressway indicated by an arrow passes through an area with cells 1 to 12 formed. The expressway of Fig. 3 marginally passes through the area of the cell 7 after passing through the area of the cell 6 before going into the area of the cell 1.

In conventional handover controlling methods, information of all the cells around the cell where a mobile device is currently located, is supplied as surrounding cells from an RNC to the mobile device regardless of the situation of the mobile device. Therefore, if a vehicle traveling on the expressway of Fig. 3 is located in the cell 6 and a mobile device is in communication within this vehicle, the RNC notifies the mobile device that the surrounding cells are the cells 1, 5, 7, 8, 9, and 10.

If the mobile device measures and reports to the RNC a reception level from the cell 7 that is one of the surrounding cells when the vehicle arrives at a point A near the boundary between the cell 6 and the cell 7 and if the reported received electric field intensity is equal to a predetermined value or more, the RNC determines that handover is necessary, and a radio link is established between the mobile device and the cell 7 to execute the handover to the cell 7.

After executing the handover to the cell 7, the mobile device is notified by the RNC that the surrounding cells are the cells 1, 2, 6, 8, 11, and 12. If the mobile device measures and reports to the RNC a reception level from the cell 1 that is one of the surrounding cells when the vehicle arrives at a point B near the boundary between the cell 7 and the cell 1 and if the reported received electric field intensity is equal to a predetermined value or more, the RNC determines that handover is necessary, and a radio link is established between the mobile device and the cell 1 to execute handover to the cell 1.

Sine the handover is sequentially executed with a short interval in the case of this example, the communication tends to become unstable. Since the mobile device moves through boundary portions of cells that tend to cause relative changes in the reception levels of cells, this may cause handovers to frequently occur, resulting in unstable communication.

Therefore, in a handover controlling method according to the first embodiment, a handover shift pattern is preliminarily defined (predetermined or predicted) for each of traffic paths such as expressways and railroads (hereinafter, these paths are referred to as "tracks"), and if a mobile device moves at high speed, candidate cells of a handover destination are limited based on the shift pattern corresponding to the track of the moving mobile device. Here, the term "shift pattern" includes, for example, a sequence of cells which the mobile device should use assuming it follows the predicted track, or more precisely the preferable sequence of cells to maintain reception without unnecessary handovers. For example, in the case of the example shown in Fig. 3, if a shift pattern of "cell 9-cell 6-cell 1-cell 2" has been defined, only the cell 1 is defined as a candidate of the handover destination and handover to the cell 7 is constrained if a mobile device moving at high speed is located at the position A in the cell 6.

In the handover controlling method according to the first embodiment, information related to a mobile device moving at high speed is exchanged between the RNCs 200 to prevent frequent handovers. Specifically, if a mobile device moving at high speed within its own cell proceeds toward a cell subject to another RNC 200, the RNC 200 notifies the RNC 200 managing the mobile device's destination cell of the fact that the mobile device is moving at high speed along with the normal notification details. The RNC 200 managing the destination cell may also recognize that the mobile device is moving at high speed from this notification and limit the handover target cells in accordance with the predefined shift patterns.

In the handover controlling method according to the first embodiment, conventional control is performed while the mobile device moves at low speed. Therefore, if a person walks along the express way of Fig. 3 and arrives at the point A while using the mobile device in communication, the handover to the cell 7 may be executed without constraints from the predefined shift patterns ("tracks"). However, even if the handover to the cell 7 is executed, since it takes time to walk from the point A to the point B, the handover is not consecutively executed in a short time and no problem occurs. If the reception level from the cell 7 is good, the handover to the cell 7 would rather be executed to acquire a preferable communication state while moving at low speed.

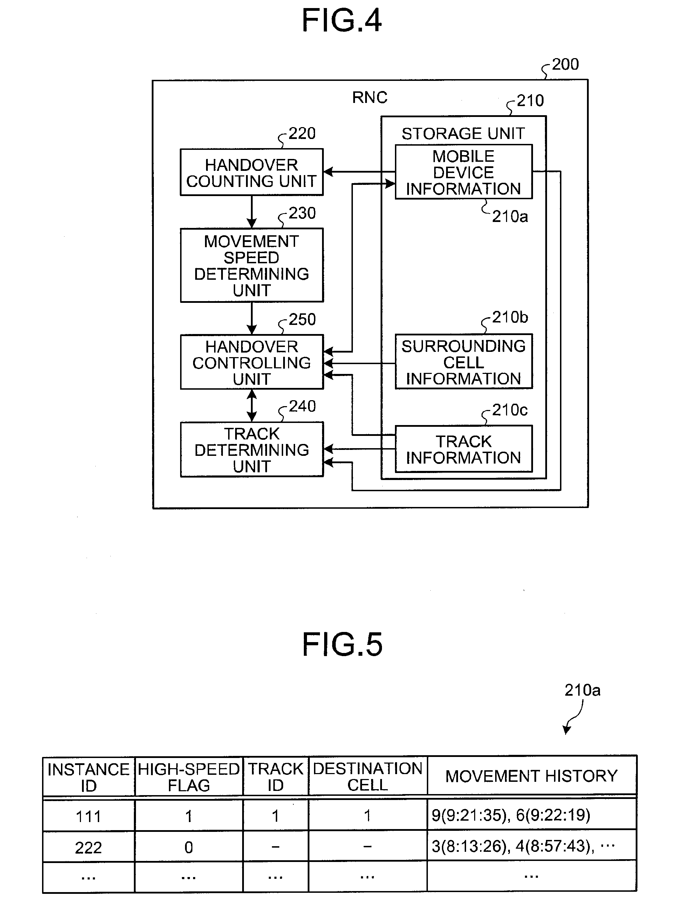

The configuration of the RNC 200, which is a communication controlling apparatus executing the handover controlling method according to the first embodiment will now be explained. Fig. 4 is a view of the configuration of the RNC 200. As shown in Fig. 4, the RNC 200 includes a storage unit 210, a handover counting unit 220, a movement speed determining unit 230, a track determining unit 240, and a handover controlling unit 250.

The storage unit 210 is a storage unit that has various types of information stored therein and has mobile device information 210a, surrounding cell information 210b, and track information 210c stored therein. The mobile device information 210a is information about mobile devices in communication within a cell served by the NodeB 300 under the control of the RNC 200. The surrounding cell information 210b is information about surrounding cells of the cells served by the NodeB 300 under the control of the RNC 200. The track information 210c is information about tracks (likely paths of users) in an area including the cells served by the NodeB 300 under the control of the RNC 200.

The mobile device information 210a, the surrounding cell information 210b, and the track information 210c will be explained in detail with reference to specific examples. Fig. 5 is a view of an example of the mobile device information 210a. As shown in Fig. 5, the mobile device information 210a includes items such as an instance ID, a high-speed flag, a track ID, a destination cell, and movement histories, and data are registered for each mobile device.

The instance IDs are identification numbers for identifying mobile devices. The high-speed flag is a flag indicative of whether a mobile device is moving at high speed and is set to "1" if a mobile device is moving at high speed, otherwise, set to "0". The track ID is an identification number for identifying which, if any, predetermined path or track a mobile device is moving on and corresponds to a track ID of the track information 210c. No track ID is set if a mobile device is not moving at high speed.

The destination cell is an identification number of a cell that is the next handover destination if a mobile device keeps moving along a track indicated by the track ID. No destination cell is set if a mobile device is not moving at high speed. The movement histories are information about cells a mobile device once belonged to and include identification numbers for identifying these cells and times when handover is executed from these cells to the next cells by the number of predetermined periods or the number of predetermined generations.

Data in a first line of the mobile device information 210a of Fig. 5 indicate that a mobile device with the identification number of "111" is moving on a track with the identification number of "1" at high speed. The same data indicate that handover should be executed to a cell identified with the identification number of "1" if the mobile device keeps moving along the current track and that the mobile device once belonged to a cell with the identification number of "9" and a cell with the identification number of "6".

The next handover target cell is identified for a mobile device moving at high speed in the mobile device information 210a as above.

Data in a second line of the mobile device information 210a of Fig. 5 indicate that a mobile device with the identification number of "222" is moving at low speed. The same data indicate that the mobile device once belonged to a cell with the identification number of "3" and a cell with the identification number of "4". Since the mobile device is not moving at high speed, a track ID and a destination cell are not set in the data.

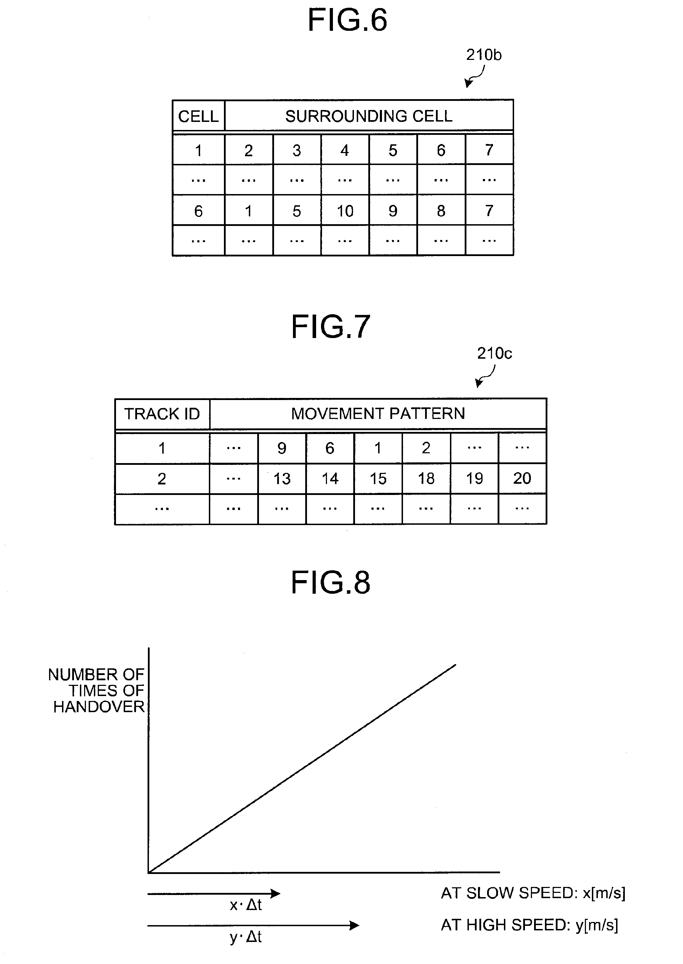

Fig. 6 is a view of an example of the surrounding cell information 210b. As shown in Fig. 6, the surrounding cell information 210b has an identification number of a cell and identification numbers of cells surrounding the cell registered in a correlated manner.

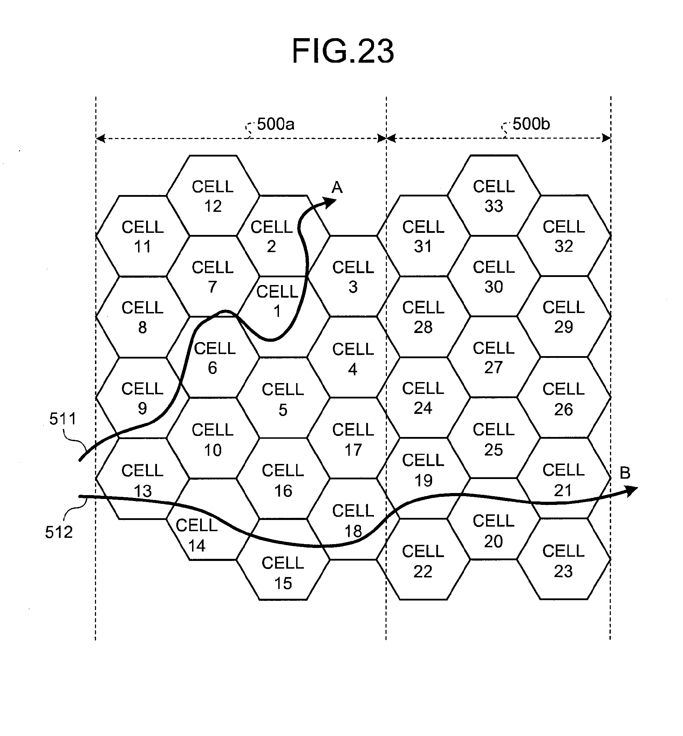

The surrounding cell information 210b of Fig. 6 corresponds to a section 500a shown in Fig. 23 and data in a first line indicate that six cells with the identification numbers of "2", "3" "4" "5" "6", and "7" exist around a cell with the identification number of "1".

Fig. 7 is a view of an example of the track information 210c. As shown in Fig. 7, shift patterns are registered and correlated with identification numbers of tracks in the track information 210c. A shift pattern lists identification numbers of cells to be handover targets in chronological order if a mobile device moves on a corresponding track.

The track information 210c of Fig. 7 corresponds to tracks in the section 500a shown in Fig. 23 and data in a first line indicates that four cells with the identification numbers of "9", "6", "1", and "2" should be targets of handover in this order if the mobile device moves on a track with the identification number of "1".

To correctly determine a path even if the mobile device moves across sections managed by the RNC 200, shift patterns including cells of sections under the management of the RNC 200 adjacent to the relevant RNC 200 are registered in the track information 210c. For example, in data in the second line of the track information 210c shown in Fig. 7, a cell with the identification number of "19" in a section 500b is registered as a handover target cell next to a cell with the identification number of "18".

Returning to the description of Fig. 4, the handover counting unit 220 has stored therein the number of times of execution of handover for each mobile device and calculates the number of times of handover per unit time for each mobile device. The number of times of execution of handover may be stored as the number of times the measurement report response is transmitted from the mobile station or may be stores as the number of times the relevant RNC 200 transmits the radio link addition request or the handover execution instruction. Alternatively, the number of times of handover per unit time may be calculated from the set values of the movement histories of the mobile device information 210a.

The movement speed determining unit 230 determines whether a mobile device is moving at high speed based on the number of times of handover per unit time calculated by the handover counting unit 220. As shown in Fig. 8, the number of times of handover per unit time increases as the movement speed becomes higher. Therefore, the movement speed determining unit 230 compares the number of times of handover of a mobile device per unit time with a predefined threshold value and determines that the mobile device is moving at high speed if the number of times of handover per unit time is greater than the threshold value. This threshold value may suitably be determined based on station conditions, operation conditions, etc.

Since it is determined based on the number of times of handover whether a mobile device is moving at high speed, the RNC 200 is capable of determining whether a mobile device is moving at high speed without changing configurations of mobile devices and other apparatuses such as NodeBs. The handover controlling unit 250 utilizes the determination result of the movement speed determining unit 230.

The track determining unit 240 determines which track a mobile device moving at high speed is on. Specifically, the track determining unit 240 receives the identification number of a mobile device and the identification number of a cell where the mobile device is currently located specified by the handover controlling unit and extracts a track including the identification number of the specified cell in the shift pattern from the track information 210c. If a plurality of tracks is extracted, the track determining unit 240 acquires the movement histories corresponding to the identification number of the specified mobile device from the mobile device information 210a and checks the movement histories against portions before the identification number of the specified cell of the shift patterns corresponding to the extracted tracks.

The handover controlling unit 250 executes various controls related to the handover. Specifically, the handover controlling unit 250 executes the conventional handover control for a mobile device determined as not moving at high speed by the movement speed determining unit 230. On the other hand, for a mobile device determined as moving at high speed by the movement speed determining unit 230, the handover controlling unit 250 drives the track determining unit 240 to determine which track the mobile device is on and acquires a shift pattern on the determined track from the track information 210c to perform control such that the handover is executed in accordance with the shift pattern.

To execute the handover of the mobile device moving at high speed in accordance with the shift pattern, the handover controlling unit 250 identifies a cell that is the next handover target in the shift pattern for the mobile device moving at high speed, and if the measurement report response for cells other than the cell is received from the mobile device, the handover controlling unit 250 discards the response.

Specifically, if it is determined that a mobile device is moving at high speed, the handover controlling unit 250 sets the high-speed flag of the corresponding data of the mobile device information 210a to "1" as in the data of the first line of Fig. 5. The handover controlling unit 250 sets the identification number of the track determined by the track determining unit 240 as the track ID and sets the identification number of the cell that is the next handover target on the track as the destination cell.

When the measurement report response is received from the mobile device in the situation of Step S02 shown in Fig. 2, the procedure subsequent to Step S03 is executed only if the target of the measurement report response is the cell set as the destination cell. If the target of the measurement report response is not the cell set as the destination cell, the handover controlling unit 250 discards the measurement report response and does not execute the procedure subsequent to Step S03.

Since only the measurement report response for the cell set as the destination cell is handled in the conventional manner and the measurement report responses for other cells are discarded, the execution of handover is not instructed for cells other than the cell set as the destination cell, and the handover is certainly executed for the cell set as the destination cell.

If it is determined that the reception level of the cell set as the destination cell satisfies a predetermined condition, the handover controlling unit 250 instructs the mobile device moving at high speed to execute the handover to the cell as usual and notifies the mobile device of cells surrounding the handover destination cell. The handover controlling unit 250 updates a value of the destination cell in the data of the mobile device in the mobile device information 210a with the identification number of the next cell in the shift pattern corresponding to the track indicated by the track ID.

Since a value of the destination cell is updated as above at the time of handover in addition to the conventional process, the handover controlling unit 250 continuously limits the handover destination of the mobile device moving at high speed to implement the handover in accordance with the shift pattern (track).

If the mobile device determined as moving at high speed by the movement speed determining unit 230 is moving into a cell under the management of another RNC 200, the handover controlling unit 250 notifies the RNC 200 managing the destination cell that the mobile device is moving at high speed. This causes the RNC 200 managing the destination cell to immediately recognize that the mobile device is moving at high speed, and the handover control adapted to the high speed movement is continuously executed.

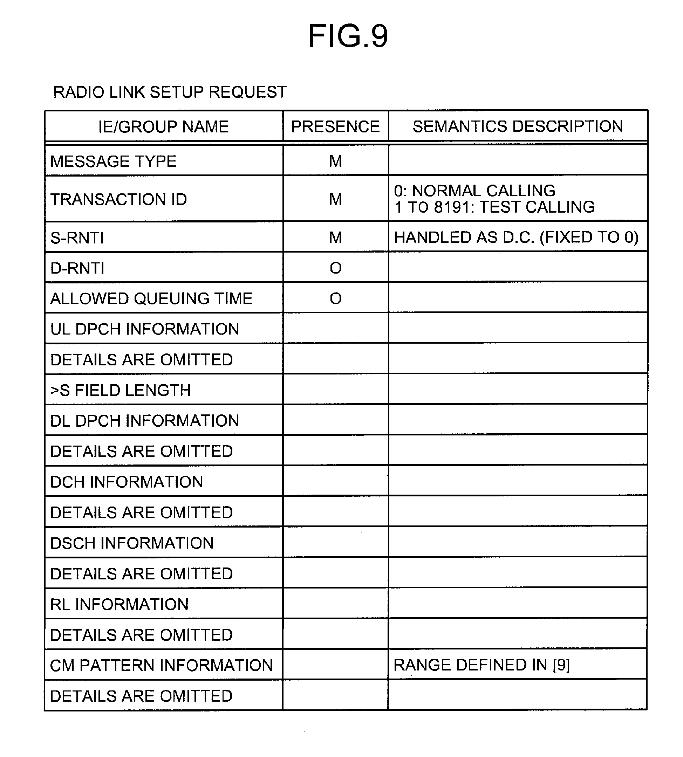

A dedicated message format or a portion of an existing message format may be used for notifying that the mobile device is moving at high speed. Fig. 9 is a view of a message format of the radio link setting request used for requesting the setting of the radio link from RNC to another RNC. S-RNTI in this format is D.C. (Don't Care), and is set to "0" in normal system operation methods. Therefore, operation may be performed such that a mobile device moving at high speed is indicated if this item is set to "1". Of course, other items may be used to indicate that the mobile device is moving at high speed. The track ID and the movement histories may also be supplied to facilitate the determination of a track in the RNC 200 managing the destination cell.

The determination result of the movement speed determining unit 230 for each mobile device may change over time. Therefore, the handover controlling unit 250 switches control of each mobile device as needed depending on the determination result supplied from the movement speed determining unit 230.

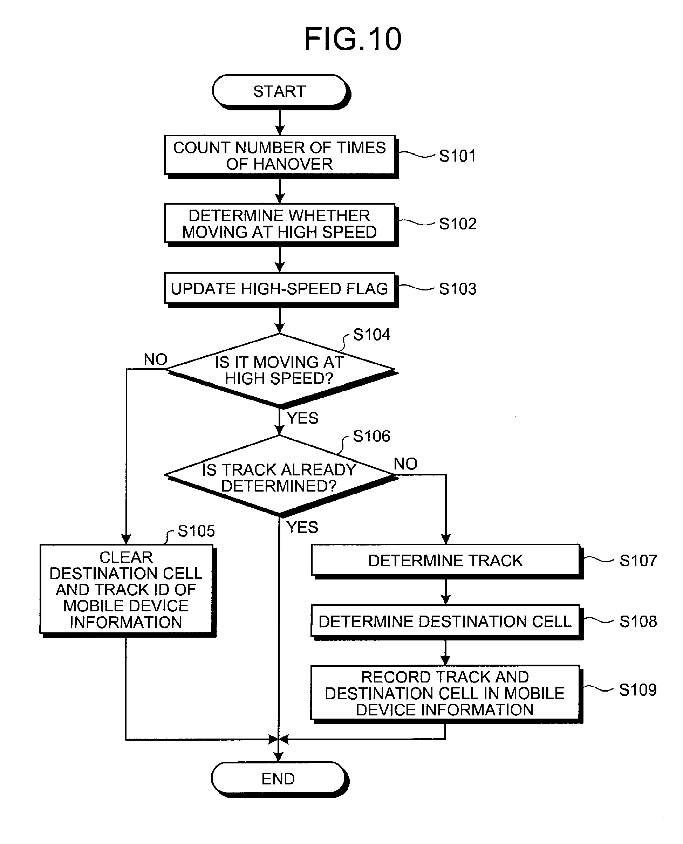

The operation of the RNC 200 of Fig. 4 will now be explained. Fig. 10 is a flowchart of a process procedure of a movement speed determining process. This movement speed determining process is a process periodically executed by the RNC 200 for each mobile device. As shown in Fig. 10, the handover counting unit 220 counts the number of times of handover per unit time of a mobile device (Step S101), and the movement speed determining unit 230 determines whether the mobile device is moving at high speed based on the count result (Step S102).

The handover controlling unit 250 updates a value of the high-speed flag of the mobile device in the mobile device information 210a based on the determination result of the movement speed determining unit 230 (Step S103). If the movement speed determining unit 230 determines that the mobile device is not moving at high speed (No at Step S104), the handover controlling unit 250 clears the destination cell and a value of the track ID of the mobile device in the mobile device information 210a (Step S105).

On the other hand, if the movement speed determining unit 230 determines that the mobile device is moving at high speed (Yes at Step S104) and a track is not yet determined (No at Step S106), the handover controlling unit 250 drives the track determining unit 240 to determine the track (Step S107). Whether the track has been determined may be determined by checking whether the track ID has been set in the data of the mobile device in the mobile device information 210a.

The handover controlling unit 250 determines the destination cell that is the next handover target of the mobile device in the determined track (Step S108) and records the determined track and the destination cell in the data of the mobile device in the mobile device information 210a (Step S109). Although the track is not determined if the track has been determined in the above procedure, the track may always be determined if it is determined that the mobile device is moving at high speed to improve the accuracy of the determination of the track.

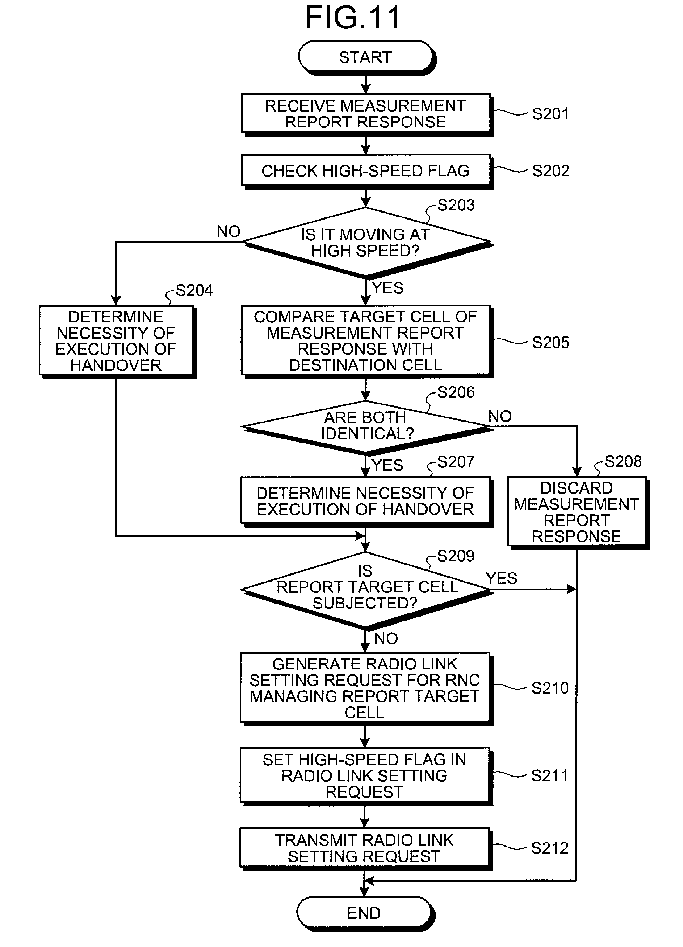

Fig. 11 is a flowchart of a process procedure of a measurement report response receiving process. This measurement report response receiving process is a process executed each time the measurement report response is received from the mobile device. When the measurement report response is received (Step S201), the handover controlling unit 250 refers to the mobile device information 210a to check a value of the high-speed flag of the mobile device transmitting the measurement report response (Step S202).

If the value of the high-speed flag indicates that the mobile device is not moving at high speed (No at Step S203), the handover controlling unit 250 determines the necessity of execution of handover in the conventional manner based on the reported reception level regardless of which cell is the target of the measurement report response (Step S204).

On the other hand, if the value of the high-speed flag indicates that the mobile device is moving at high speed (Yes at Step S203), the handover controlling unit 250 acquires a value of the destination cell from the data of the mobile device in the mobile device information 210a and compares the value with the identification number of the target cell of the measurement report response (Step S205). If both are identical (Yes at Step S206), the handover controlling unit 250 determines the necessity of execution of handover based on the reported reception level (Step S207), otherwise (No at Step S206), the measurement report response is discarded (Step S208).

Unless the measurement report response is discarded, if the target cell of the measurement report response is not subject to the relevant RNC 200 (No at Step S209), the handover controlling unit 250 generates a radio link setting request having the identification number of the mobile device and the identification number of the destination cell set for the RNC 200 managing the cell (Step S210). A value indicative of whether the mobile device is moving at high speed is set in S-RNTI, etc., of the generated radio link setting request (Step S211) and the radio link setting request is transmitted (Step S212).

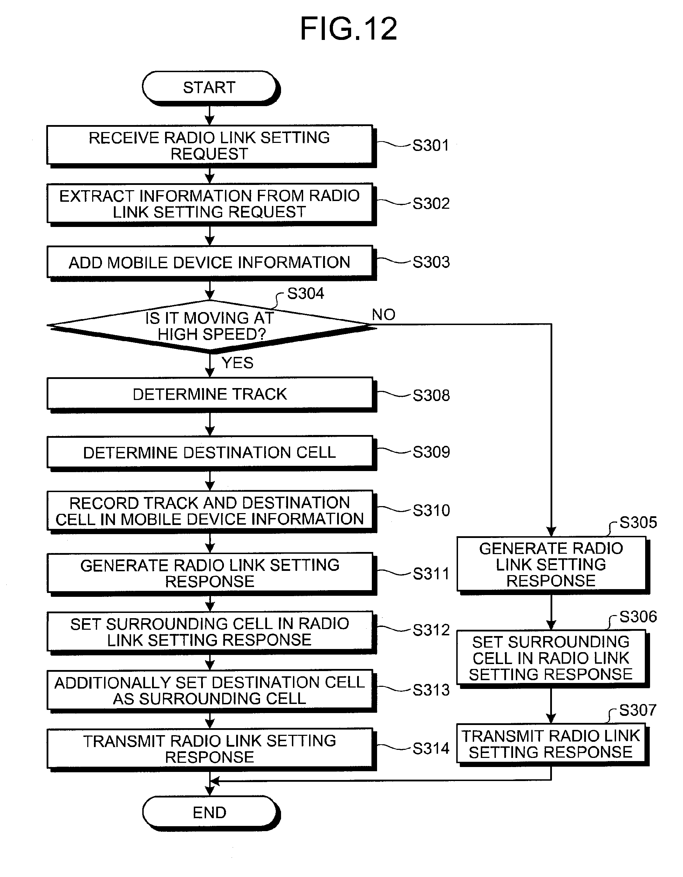

Fig. 12 is a flowchart of a process procedure of a radio link setting request receiving process. This radio link setting request receiving process is a process executed each time the radio link setting request transmitted in the measurement report response receiving process of Fig. 11 is received.

As shown in Fig. 12, when the radio link setting request is received (Step S301), the handover controlling unit 250 extracts information from the radio link setting request (Step S302). If a mobile device corresponding to the extracted information is not registered in the mobile device information 210a, the handover controlling unit 250 adds the data of the mobile device to the mobile device information 210a (Step S303).

If the radio link setting request does not have the setting indicative of the mobile device moving at high speed (No at Step S304), the handover controlling unit 250 generates the radio link setting response in the conventional manner (Step S305). The handover controlling unit 250 then sets information of surrounding cells of the cell extracted from the radio link setting request in the radio link setting response (Step S306) and transmits the radio link setting response to the RNC 200 that is a transmission source of the radio link setting request (Step S307).

On the other hand, if the radio link setting request has the setting indicative of the mobile device moving at high speed (Yes at Step S304), the handover controlling unit 250 drives the track determining unit 240 to determine the track based on the extracted information (Step S308). The handover controlling unit 250 determines the destination cell that is the next handover target of the mobile device in the determined track (Step S309) and records the determined track and the destination cell in the data of the mobile device in the mobile device information 210a (Step S310). This enables the handover controlling unit 250 to limit the destination cell such that the handover is executed in accordance with the shift pattern.

The handover controlling unit 250 generates the radio link setting response (Step S311), sets information of surrounding cells of the cell extracted from the radio link setting request in the radio link setting response (Step S312), and additionally sets the information of the destination cell as the surrounding cell in the radio link setting response (Step S313). The handover controlling unit 250 transmits the radio link setting response generated in this way to the RNC 200 that is a transmission source of the radio link setting request (Step S314).

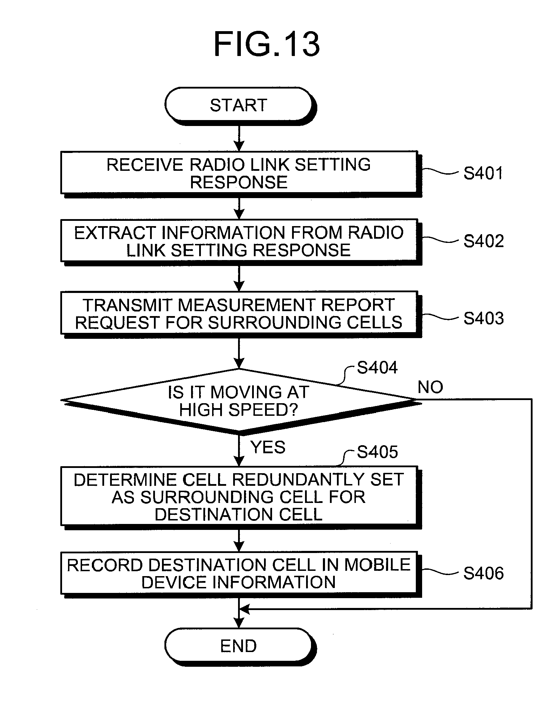

Fig. 13 is a flowchart of a process procedure of a radio link setting response receiving process. This radio link setting response receiving process is a process executed each time the radio link setting process transmitted in the radio link setting request receiving process of Fig. 12 is received.

As shown in Fig. 13, when the radio link setting response is received (Step S401), the handover controlling unit 250 extracts information from the radio link setting response (Step S402). The handover controlling unit 250 then transmits a measurement report request for requesting the mobile device that is the target of the radio link setting response to measure the reception levels of the surrounding cells extracted from the radio link setting response (Step S403).

If it is known that the mobile device is moving at high speed when checking the high-speed flag of the target mobile device of the radio link setting response by reference to the mobile device information 210a (Step S404), the handover controlling unit 250 identifies a cell redundantly set as the surrounding cell in the radio link setting response and determines the cell for the destination cell (Step S405). The handover controlling unit 250 records the destination cell in the data of the mobile device in the mobile device information 210a (Step S406).

Exchange of information between the RNCs 200 will specifically be explained. In the example shown in Fig. 23, if the mobile device moves at high speed from a cell 18 to a cell 19 on a track 512, the RNC 200a managing the section 500a transmits the radio link setting request having a flag set to indicate that the mobile device is moving at high speed to the RNC 200b managing the section 500b at the time of execution of handover (Step S212).

When the RNC 200b receives the radio link setting request and confirms that the radio link setting request includes the setting indicative of the mobile device moving at high speed, the RNC 200b identifies a cell 20 as the destination cell (Step S309) and records the destination cell in the mobile device information 210a such that the measurement report response is discarded if the measurement report response is transmitted from the relevant mobile device for cells other than the cell 20 (Step S310).

The RNC 200b transmits to the RNC 200a the radio link setting response having the cell 20, i.e., the destination cell redundantly set as the surrounding cell (Step S314). This radio link setting response also has a cell 17, a cell 18, a cell 22, a cell 24, and a cell 25 set as the surrounding cells other than the redundantly set cell 20.

The RNC 200a receives the radio link setting response and transmits to the mobile device the measurement report request for the surrounding cells included in the response (Step S403). The RNC 200a determines the redundantly set cell 20 as the destination cell (Step S405) and records the destination cell in the mobile device information 210a such that the measurement report response is discarded if the measurement report response is transmitted from the relevant mobile device for cells other than the cell 20 (Step S406).

Since the RNCs 200 exchange information about the mobile device moving at high speed when the handover is generated across the RNCs 200, the setting may be implemented in the both RNCs for certainly defining only the destination cell as the handover destination.

Since a determination is made of which track corresponding to which predefined shift pattern a mobile device moving at high speed travels on; a destination cell is identified in the shift pattern corresponding to the determined track; and only the measurement report response for the identified cell is recognized in the first embodiment as explained above, the necessity of execution of the handover is determined based on the reception level acquired from the measurement report response for the cell identified as the destination, and the communication may certainly be prevented from becoming unstable due to unnecessary handover frequently occurring while the mobile device is moving at high speed.

Since the destination RNC is notified of whether the mobile device is moving at high speed if the handover is executed across the RNCs in the first embodiment, the communication may certainly be prevented from becoming unstable due to unnecessary handover frequently occurring while the mobile device is moving at high speed in both the source RNC and the destination RNC.

Although the RNC estimates a movement speed of a mobile device to determine whether the mobile device is moving at high speed in the example explained in the first embodiment, the mobile device may estimate a movement speed. Although the operation at the time of reception of the measurement report response in the RNC is changed to certainly execute the handover to the destination cell in the example explained in the first embodiment, the same effect may be achieved by changing the operation at the time of transmission of the measurement report request in the RNC.

Therefore, an example will now be explained in which the mobile device estimates its own movement speed to determine whether it is moving at high speed, and in which the operation at the time of transmission of the measurement report request in the RNC is changed to certainly execute the handover to the destination cell in a second embodiment. The same portions as the already explained constituent elements are given the same reference numerals and will not explained again in the following description.

A radio network system according to the second embodiment will first be explained. The radio network system according to the second embodiment has the same configuration as the radio network system according to the first embodiment, except that an RNC 201 is used instead of the RNC 200 and a mobile device 401 is used instead of the mobile device 400.

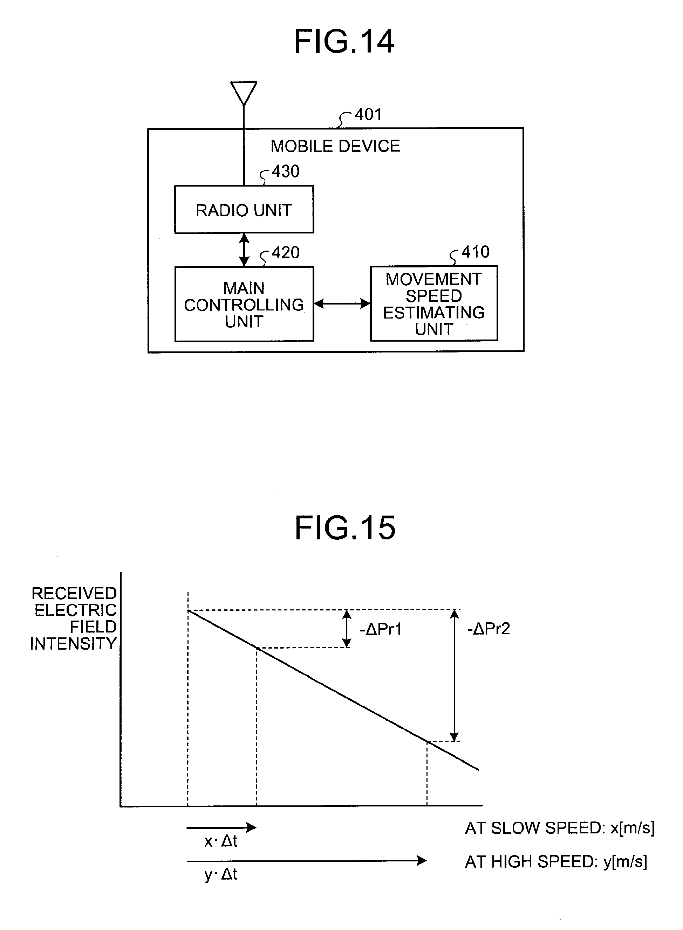

The configuration of the mobile device 401 according to the second embodiment will be explained. Fig. 14 is a view of the configuration of the mobile device 401. As shown in Fig. 14, the mobile device 401 includes a movement speed estimating unit 410, a main controlling unit 420, and a radio unit 430 that uses a radio link with the NodeB 300 for communication.

The movement speed estimating unit 410 estimates a movement speed of the mobile device 401 from changes in the received electric field intensity. The received electric field intensity is reduced as a distance between the mobile device and the NodeB increases. Therefore, assuming that the mobile device moves away from the NodeB, the reduction in the received electric field intensity per unit time is greater when the mobile device is moving at higher speed than when the mobile device is moving at lower speed as shown in Fig. 15. Therefore, the movement speed estimating unit 410 acquires electric field information received by the radio unit 430 and processed by the main controlling unit as needed to estimate the movement speed of the mobile device 401 based on a change in the received electric field intensity per unit time.

The main controlling unit 420 performs control for implementing the radio communication. The main controlling unit 420 executes a process of notifying the RNC 201 of the movement speed of the mobile device estimated by the movement speed estimating unit 410 in addition to the control performed by a similar controlling unit in a conventional mobile device.

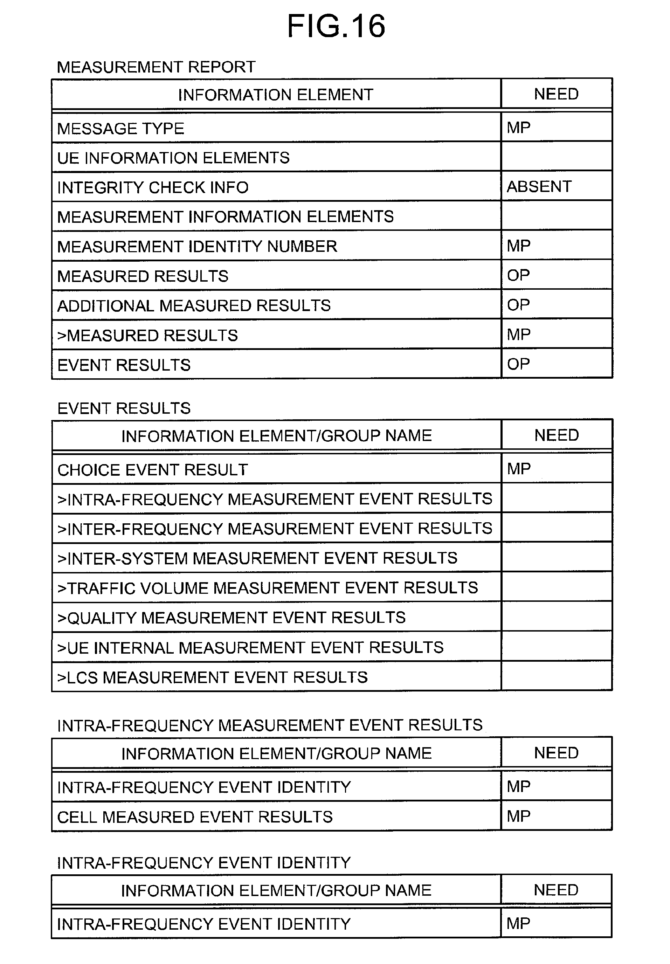

A dedicated message format or a portion of an existing message format may be used for notification of the movement speed of the mobile device 401. Fig. 16 is a view of a message format of the measurement report response. An item of infra-frequency event identity is included in the measurement report response as shown in Fig. 16. For example, a value set in this infra-frequency event identity may be changed to notify the RNC 201 of the movement speed of the mobile device 401.

A value set in this infra-frequency event identity means addition of a radio link in the case of "1a", deletion of a radio link in the case of "1b", change of a radio link in the case of "1d", and main radio link report in the case of "1d". If this system of set values is extended to set "2a" "2b" "2c" and "2d" instead of "1a" "1b", "1c", and "1d", respectively, when the mobile device moves at a speed higher than a predetermined speed, the RNC 201 may determine whether the mobile device 401 is moving at high speed. Of course, other items may be used for the notification of information about the movement speed of the mobile device 401.

If the RNC 201 is notified of whether moving at high speed as in the above example, the main controlling unit 420 compares the estimation value of the movement speed acquired by the movement speed estimating unit 410 with a threshold value to determine whether the mobile device is moving at high speed. This threshold value may suitably be determined based on station conditions, operation conditions, etc.

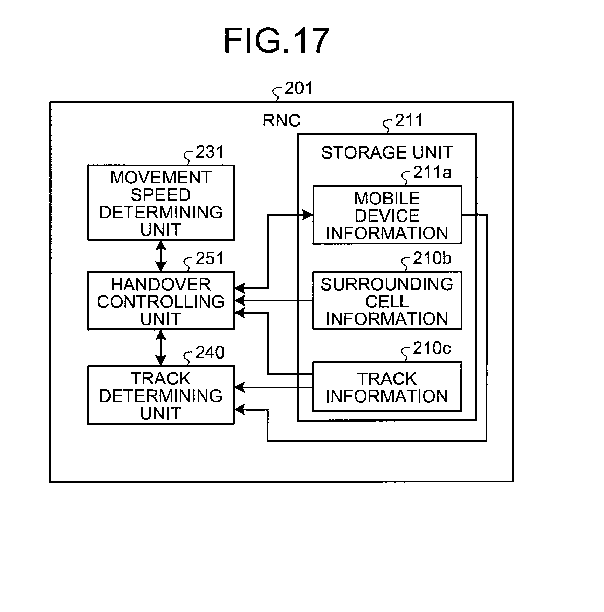

The configuration of the RNC 201 according to the second embodiment will then be explained. Fig. 17 is a view of the configuration of the RNC 201. As shown in Fig. 17, the RNC 201 includes a storage unit 211, a movement speed determining unit 231, the track determining unit 240, and a handover controlling unit 251.

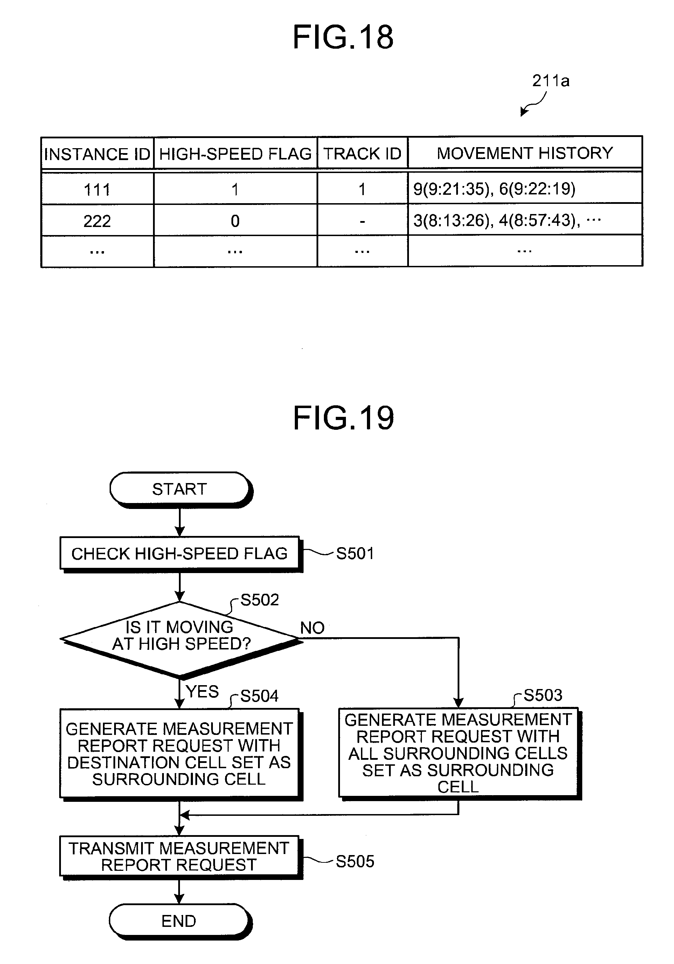

The storage unit 211 is a storage unit that has various types of information stored therein and has mobile device information 211a, the surrounding cell information 210b, and the track information 210c stored therein. The mobile device information 211a is information about mobile devices in communication within a cell served by the NodeB 300 under the control of the RNC 201. Fig. 18 shows an example of the mobile device information 211a. As shown in Fig. 18, the mobile device information 211a has the same data configuration as the mobile device information 210a shown in Fig. 5 except that the item of the destination cell is not included.

The movement speed determining unit 231 determines whether the mobile device 401 is moving at high speed based on the notification from the mobile device 401. For example, if the mobile device 401 notifies of whether moving at high speed with the system of set values of the infra-frequency event identity in the measurement report response extended as above, the movement speed determining unit 231 determines whether the mobile device 401 is moving at high speed based on a set value of the infra-frequency event identity.

The handover controlling unit 251 executes various control procedures related to the handover. Specifically, the handover controlling unit 251 executes the conventional handover control for a mobile device determined as not moving at high speed by the movement speed determining unit 231. On the other hand, for a mobile device determined as moving at high speed by the movement speed determining unit 231, the handover controlling unit 251 drives the track determining unit 240 to determine which track the mobile device is on and acquires a shift pattern on the determined track from the track information 210c to perform control such that the handover is executed in accordance with the shift pattern.

To execute the handover of the mobile device moving at high speed in accordance with the shift pattern, the handover controlling unit 251 identifies a cell that is the next handover target in the shift pattern for the mobile device moving at high speed, transmits only the measurement report request for the cell to the mobile device, and does not transmit the measurement report requests for other cells to the mobile device.

Specifically, if it is determined that a mobile device is moving at high speed, the handover controlling unit 251 sets the high-speed flag of the corresponding data of the mobile device information 211a to "1" as in the data of the first line of Fig. 5. The handover controlling unit 251 sets the identification number of the track determined by the track determining unit 240 as the track ID. The handover controlling unit 251 transmits the measurement report request only for the cell that is the next handover target in the determined track instead of transmitting the measurement report request for all the surrounding cells in the situation of Step S01 of Fig. 2.

When the measurement report request is transmitted only for the cell that should be the next handover target, the RNC 201 does not notified of the reception levels of other cells and the handover is certainly performed to the cell that should be the next handover target.

If it is determined that the reception level of the cell set as the destination cell satisfies a predetermined condition, the handover controlling unit 251 instructs the mobile device moving at high speed to execute the handover to the cell and notifies the mobile device of only the next cell on the determined track as the surrounding cell of the handover destination cell. Since only a certain cell is supplied as the surrounding cell at the time of handover in this way, the handover controlling unit 251 may continuously limit the handover destination of the mobile device moving at high speed to implement the handover in accordance with the shift pattern.

If the mobile device determined as moving at high speed by the movement speed determining unit 231 is moving into a cell under the management of another RNC 201, the handover controlling unit 251 notifies the RNC 201 managing the destination cell that the mobile device is moving at high speed. This causes the RNC 201 managing the destination cell to immediately recognize that the mobile device is moving at high speed, and the handover control adapted to the high speed movement is continuously executed.

The notification of the mobile device moving at high speed may be sent with the use of the item of S-RNTI in the radio link setting request used by the RNC requesting another RNC to establish a radio link as explained above.

The determination result of the movement speed determining unit 231 for each mobile device may change over time. Therefore, the handover controlling unit 251 switches control of each mobile device as needed depending on the determination result supplied from the movement speed determining unit 231.

The operation of the RNC 201 of Fig. 17 will then be explained. Fig. 19 is a flowchart of a process procedure of a measurement report request transmitting process. This measurement report request transmitting process is a process executed for notifying the mobile device of a surrounding cell that is the new target of the reception level report at the time of execution of the handover.

As shown in Fig. 19, the handover controlling unit 251 refers to the mobile device information 211a to check a value of the high-speed flag of the mobile device to be notified (Step S501). If the value of the high-speed flag indicates that the mobile device is not moving at high speed (No at Step S502), the handover controlling unit 251 generates the measurement report request with all the surrounding cells set as the surrounding cells in the conventional manner (Step S503) and transmits the request to the mobile device (Step S505).

On the other hand, if the value of the high-speed flag indicates that the mobile device is moving at high speed (Yes at Step S502), the handover controlling unit 251 acquires a value of the track ID in the data of the mobile device to be notified in the mobile device information 211a, acquires the shift pattern corresponding to the track ID from the track information 210c, generates the measurement report request with only the next handover target cell in the shift pattern set as the surrounding cell (Step S504), and transmits the request to the mobile device (Step S505).

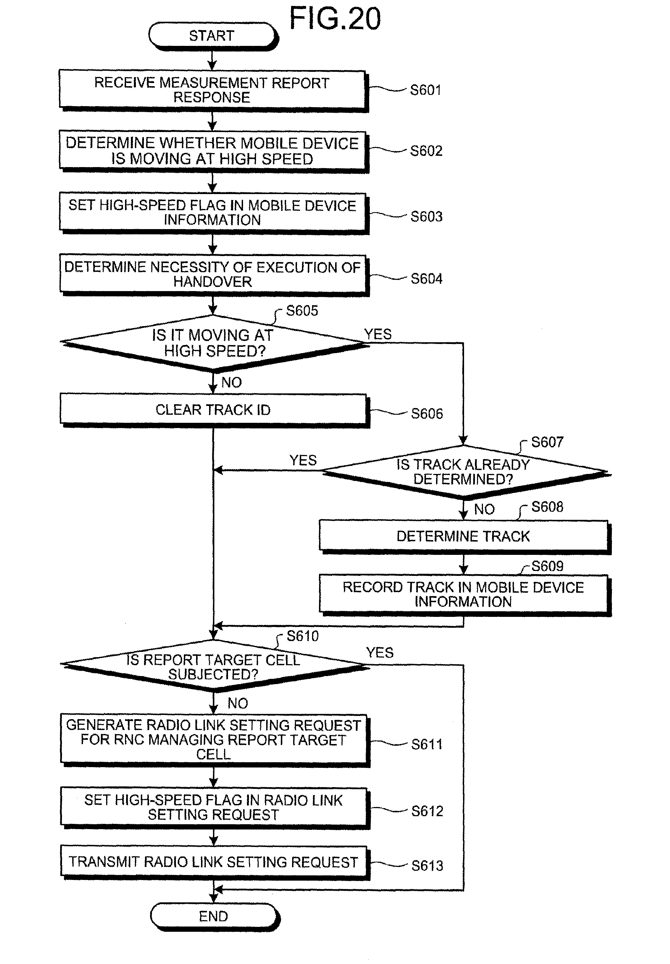

Fig. 20 is a flowchart of a process procedure of a measurement report response receiving process. This measurement report response receiving process is a process executed each time the measurement report response is received from the mobile device. When the measurement report response is received (Step S601), the movement speed determining unit 231 determines whether the mobile device is moving at high speed based on the setting details (Step S602). The handover controlling unit 251 sets the high-speed flag in the data of the mobile device in the mobile device information 211a depending on the determination result of the movement speed determining unit 231 (Step S603) and determines the necessity of execution of handover based on the reported reception level (Step S604).

If the movement speed determining unit 231 determines that the mobile device is not moving at high speed (No at Step S605), the handover controlling unit 251 clears the track ID in the data of the mobile device in the mobile device information 211a (Step S606).

On the other hand, if the movement speed determining unit 231 determines that the mobile device is moving at high speed (Yes at Step S605) and a track is not yet determined (No at Step S607), the handover controlling unit 251 drives the track determining unit 240 to determine the track (Step S608). Whether the track has been determined may be determined by checking whether the track ID has been set in the data of the mobile device in the mobile device information 211a.

The handover controlling unit 251 records the determined track in the data of the mobile device in the mobile device information 211a (Step S609). Although the track is not determined if the track has been determined in the above procedure, the track may always be determined if it is determined that the mobile device is moving at high speed to improve the accuracy of the determination of the track.

If the target cell of the measurement report response is not subject to the relevant RNC 201 (No at Step S610), the handover controlling unit 251 generates a radio link setting request having the identification number of the mobile device and the identification number of the destination cell set for the RNC 201 managing the cell regardless of whether the mobile device is moving at high speed (Step S611). A value indicative of whether the mobile device is moving at high speed is set in S-RNTI, etc., of the generated radio link setting request (Step S612) and the radio link setting request is transmitted (Step S613).

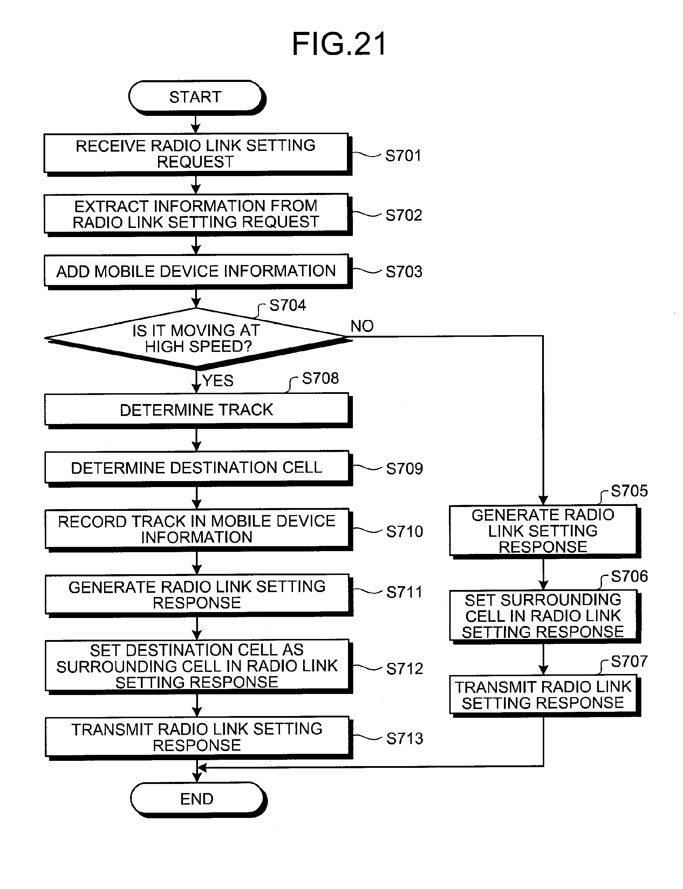

Fig. 21 is a flowchart of a process procedure of a radio link setting request receiving process. This radio link setting request receiving process is a process executed each time the radio link setting request transmitted in the measurement report response receiving process of Fig. 20 is received.

As shown in Fig. 21, when the radio link setting request is received (Step S701), the handover controlling unit 251 extracts information from the radio link setting request (Step S702). If a mobile device corresponding to the extracted information is not registered in the mobile device information 211a, the handover controlling unit 251 adds the data of the mobile device to the mobile device information 211a (Step S703).

If the radio link setting request does not have the setting indicative of the mobile device moving at high speed (No at Step S704), the handover controlling unit 251 generates the radio link setting response (Step S705). The handover controlling unit 250 then sets information of surrounding cells of the cell extracted from the radio link setting request in the radio link setting response in the conventional manner (Step S706) and transmits the radio link setting response to the RNC 201 that is a transmission source of the radio link setting request (Step S707).

On the other hand, if the radio link setting request has the setting indicative of the mobile device moving at high speed (Yes at Step S704), the handover controlling unit 251 drives the track determining unit 240 to determine the track based on the extracted information (Step S708). The handover controlling unit 251 determines the destination cell that is the next handover target of the mobile device in the determined track (Step S709) and records the determined track in the data of the mobile device in the mobile device information 211a (Step S710).

The handover controlling unit 251 generates the radio link setting response (Step S711) and sets information of the destination cell as the surrounding cell in the radio link setting response (Step S712). The handover controlling unit 251 transmits the radio link setting response generated in this way to the RNC 201 that is a transmission source of the radio link setting request (Step S713).

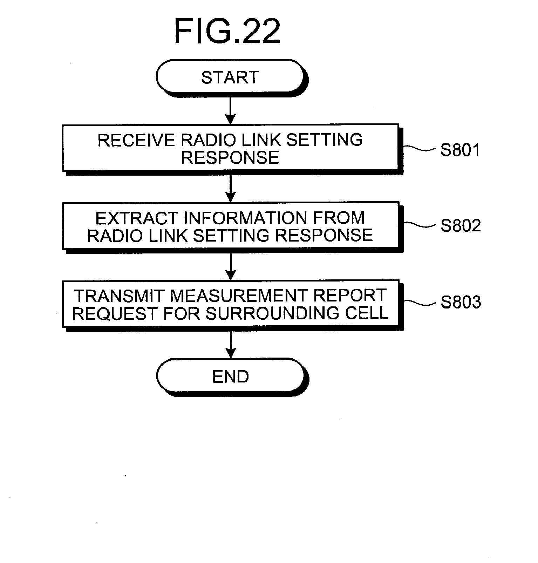

Fig. 22 is a flowchart of a process procedure of a radio link setting response receiving process. This radio link setting response receiving process is a process executed each time the radio link setting process transmitted in the radio link setting request receiving process of Fig. 21 is received.

As shown in Fig. 22, when the radio link setting response is received (Step S801), the handover controlling unit 251 extracts information from the radio link setting response (Step S802). The handover controlling unit 251 then transmits a measurement report request for requesting the mobile device that is the target of the radio link setting response to measure the reception levels of the surrounding cells extracted from the radio link setting response (Step S803).

Since all the surrounding cells are set as the surrounding cells in the radio link setting response in the conventional manner if the mobile device is not moving at high speed, all these cells may be defined as the handover target by the radio link setting response receiving process. On the other hand, since only the next cell in the shift pattern is set as the surrounding cell in the radio link setting response if the mobile device is moving at high speed, the handover target is limited to the next cell in the shift pattern by the radio link setting response receiving process.

Exchange of information between the RNCs 201 will specifically be explained. In the example shown in Fig. 23, if the mobile device moves at high speed from the cell 18 to the cell 19 on the track 512, the RNC 201a managing the section 500a transmits the radio link setting request having a flag set to indicate that the mobile device is moving at high speed to the RNC 200b managing the section 500b at the time of execution of handover (Step S613).

When the RNC 201b receives the radio link setting request and confirms that the radio link setting request includes the setting indicative of the mobile device moving at high speed, the RNC 201b identifies the cell 20 as the destination cell (Step S709) and records the track determined for identifying the cell 20 in the mobile device information 211a (Step S710). The RNC 201b transmits to the RNC 201a the radio link setting response having only the cell 20, i.e., the destination cell set as the surrounding cell (Step S713).

The RNC 201a receives the radio link setting response and transmits to the mobile device the measurement report request for only the cell 20 returned as the surrounding cell (Step S803). As a result, the handover is executed for the cell 20 subsequent to the cell 19.

Since the RNCs 201 exchange information about the mobile device moving at high speed when the handover is generated across the RNCs 201, the setting may be implemented in the both RNCs for certainly defining only the destination cell as the handover destination.

Since a determination is made of which track corresponding to which predefined shift pattern a mobile device moving at high speed travels on; a destination cell is identified in the shift pattern corresponding to the determined track; and only the measurement report response for the identified cell is transmitted to the mobile device in the second embodiment as explained above, cells other than the cell identified as the destination are not considered as candidates for the handover, and the communication may certainly be prevented from becoming unstable due to unnecessary handover frequently occurring while the mobile device is moving at high speed.

Although the RNC estimates a movement speed of a mobile device and the operation at the time of reception of the measurement report response in the RNC is changed to certainly execute the handover to the destination cell in the example explained in the first embodiment and the mobile device estimates its own movement speed and the operation at the time of transmission of the measurement report request in the RNC is changed to certainly execute the handover to the destination cell in the example explained in the second embodiment, the modes of estimating the movement speed of the mobile device and the modes for certainly executing the handover to the destination may arbitrarily be combined.

That is, the RNC may estimate a movement speed of a mobile device and the operation at the time of transmission of the measurement report request in the RNC may be changed to certainly execute the handover to the destination cell, or the mobile device may estimate its own movement speed and the operation at the time of reception of the measurement report response in the RNC may be changed to certainly execute the handover to the destination cell.

The mode of estimating the movement speed of the mobile device is not limited to the above mode and any modes may be used.

Thus, embodiments of the present invention can provide a technique for limiting handovers of a fast-moving mobile device in a cellular wireless communication system, based on setting the pattern ("shift pattern") in which handovers should be made along the route, based on predetermined "tracks".

According to the aspect of the present invention, since a handover target cell moving at high speed is determined based on preliminarily defined movement patterns and control is performed such that a radio-wave situation is supplied only from the determined cell, the execution of handover may certainly be stabilized at the time of high-speed movement.

It is also effective for solving the problem to apply the constituent elements and expression of the communication controlling apparatus disclosed in this application and an arbitrary combination of the constituent elements to a method, an apparatus, a system, a computer program, a recording medium, a data structure, etc.

One aspect of the communication controlling apparatus and the communication controlling method disclosed in this application is capable of certainly stabilizing execution of handover at the time of high-speed movement.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A communication controlling apparatus for controlling handover of a mobile device in a radio communication network, the communication controlling apparatus comprising:
a track information storage unit that has stored therein track information including tracks passing through a management area of the communication controlling apparatus and shift patterns indicative of which cell and in what order the handover is preferably executed for when the mobile device moves on the tracks defined in a correlated manner;
a movement speed determining unit that determines whether a movement speed of the mobile device is equal to a predetermined speed or more;
a track determining unit that determines a track including the mobile device in motion by extracting from the track information a track including a cell the mobile device belongs to in the shift pattern if the movement speed determining unit determines that a movement speed of the mobile device is equal to a predetermined speed or more; and
a handover controlling unit that performs control such that the mobile device notifies of a radio wave condition only for a destination cell that is the next handover target cell in the shift pattern corresponding to the track determined by the track determining unit.

2. The communication controlling apparatus according to claim 1, wherein the handover controlling unit notifies the mobile device of only the destination cell as a target of notification of a radio wave condition to perform control such that the mobile device notifies of a radio wave condition only for the destination cell.

3. The communication controlling apparatus according to claim 1 or 2, wherein when the mobile device notifies of a radio wave condition of a cell, the handover controlling unit discards the cell if the cell is not the destination cell to perform control such that the mobile device notifies of a radio wave condition only for the destination cell.

4. The communication controlling apparatus according to claim 1, 2, or 3, wherein the movement speed determining unit determines whether a movement speed of the mobile device is equal to a predetermined speed or more based on the number of times of handover per unit time or based on a result of measuring a change in a received electric field intensity with the mobile device.

5. The communication controlling apparatus according to any preceding claim, wherein if a mobile device determined as having a movement speed equal to a predetermined speed or more by the movement speed determining unit is moving into a cell under the control of another communication controlling apparatus, the handover controlling unit notifies the another communication controlling apparatus of the fact that the movement speed of the mobile device is equal to a predetermined speed or more.

6. The communication controlling apparatus according to claim 5, wherein if another communication controlling apparatus notifies of the fact that a mobile device moving into a cell under the control of the communication controlling apparatus has a movement speed equal to a predetermined speed or more, the track determining unit extracts a track including the cell that the mobile device is moving into in the shift pattern from the track information to determine a track including the mobile device in motion.

7. The communication controlling apparatus according to claim 6, wherein if another communication controlling apparatus notifies of the fact that a mobile device moving into a cell under the control of the communication controlling apparatus has a movement speed equal to a predetermined speed or more, the handover controlling unit makes a response to the another communication controlling apparatus with only a destination cell that is the next handover target cell in the shift pattern corresponding to the track determined by the track determining unit set as a surrounding cell of the cell that the mobile device is moving into.

8. The communication controlling apparatus according to claim 6, wherein if another communication controlling apparatus notifies of the fact that a mobile device moving into a cell under the control of the communication controlling apparatus has a movement speed equal to a predetermined speed or more, the handover controlling unit makes a response to the another communication controlling apparatus with a destination cell that is the next handover target cell in the shift pattern corresponding to the track determined by the track determining unit redundantly set as a surrounding cell of the cell that the mobile device is moving into.

9. A communication controlling method of controlling handover of a mobile device in a radio communication network, the communication controlling method comprising:
storing track information including tracks passing through a management area of a communication controlling apparatus and shift patterns indicative of which cell and in what order the handover is preferably executed for when the mobile device moves on the tracks defined in a correlated manner;
determining whether a movement speed of the mobile device is equal to a predetermined speed or more;
determining a track including the mobile device in motion by extracting a track including a cell the mobile device belongs to in the shift pattern from a track information storage unit having stored therein the tracks passing through a management area of the communication controlling apparatus and the shift patterns indicative of which cell and in what order the handover is preferably executed for when the mobile device moves on the tracks in a correlated manner if it is determined that a movement speed of the mobile device is equal to a predetermined speed or more; and
performing control such that the mobile device notifies of a radio wave condition only for a destination cell that is the next handover target cell in the shift pattern corresponding to the track determined.

10. The communication controlling method according to claim 9, wherein the controlling includes notifying the mobile device of only the destination cell as a target of notification of a radio wave condition to perform control such that the mobile device notifies of a radio wave condition only for the destination cell.

11. The communication controlling method according to claim 9 or 10, wherein when the mobile device notifies of a radio wave condition of a cell, the controlling includes discarding the cell if the cell is not the destination cell to perform control such that the mobile device notifies of a radio wave condition only for the destination cell.

12. The communication controlling method according to claim 9, 10, or 11, wherein the determining includes determining whether a movement speed of the mobile device is equal to a predetermined speed or more based on the number of times of handover per unit time or based on a result of measuring a change in a received electric field intensity with the mobile device.

13. The communication controlling method according to any of claims 9 to 12, wherein if a mobile device determined as having a movement speed equal to a predetermined speed or more by the movement speed determining unit is moving into a cell under the control of another communication controlling apparatus, the controlling includes notifying the another communication controlling apparatus of the fact that the movement speed of the mobile device is equal to a predetermined speed or more.

14. The communication controlling method according to claim 13, wherein if another communication controlling apparatus notifies of the fact that a mobile device moving into a cell under the control of the communication controlling apparatus has a movement speed equal to a predetermined speed or more, the determining the track includes extracting a track including the cell that the mobile device is moving into in the shift pattern from the track information to determine a track including the mobile device in motion.

15. The communication controlling apparatus according to claim 14, wherein if another communication controlling apparatus notifies of the fact that a mobile device moving into a cell under the control of the communication controlling apparatus has a movement speed equal to a predetermined speed or more, the controlling includes making a response to the another communication controlling apparatus with only a destination cell that is the next handover target cell in the shift pattern corresponding to the determined track set as a surrounding cell of the cell that the mobile device is moving into.

16. The communication controlling method according to claim 14, wherein if another communication controlling apparatus notifies of the fact that a mobile device moving into a cell under the control of the communication controlling apparatus has a movement speed equal to a predetermined speed or more, the controlling includes making a response to the another communication controlling apparatus with a destination cell that is the next handover target cell in the shift pattern corresponding to the determined track redundantly set as a surrounding cell of the cell that the mobile device is moving into.
